# EUROPÄISCHE PATENTANMELDUNG

(11) **EP 1 898 190 A1**
(43) Veröffentlichungstag der Anmeldung: **12.03.2008**
(21) Anmeldenummer: 06018951.1
(22) Anmeldetag: 11.09.2006
(51) Int. Cl.: G01G 17/06

(54) **Verfahren und Vorrichtung zur Abgabe einer exakt definierten Flüssigkeitsmenge und Zapfsäule**

(71) Anmelder: Scheidt & Bachmann GmbH, D-41238 Mönchengladbach (DE)
(72) Erfinder: Laumen, Heinz, 52538 Gangelt (DE); Höffges, Peter, 41176 Mönchengladbach (DE)
(74) Vertreter: Stenger, Watzke & Ring

(57) **Zusammenfassung**

Die vorliegende Erfindung betrifft ein Verfahren und eine Vorrichtung (1) zur Abgabe einer exakt definierten Flüssigkeitsmenge. Weiterhin betrifft die Erfindung eine Zapfsäule. Um ein Verfahren bereitzustellen, das eine einfachere und kostengünstigere Möglichkeit der Ermittlung einer exakt definierten Flüssigkeitsmenge bietet, wird mit der Erfindung vorgeschlagen, daß zur Ermittlung der exakt definierten Flüssigkeitsmenge mindestens zwei Gewichtsmessungen durchgeführt werden.

## Beschreibung

Die vorliegende Erfindung betrifft ein Verfahren zur Abgabe einer exakt definierten Flüssigkeitsmenge an einer Abgabevorrichtung. Weiterhin betrifft die Erfindung eine Abgabevorrichtung zur Abgabe einer exakt definierten Flüssigkeitsmenge. Zudem betrifft die Erfindung eine Zapfsäule.

Verfahren und Vorrichtungen zur Abgabe einer exakt definierten Flüssigkeitsmenge sind bekannt, und basieren meist auf einer Volumenmessung der abgegebenen Flüssigkeitsmenge. Ein Beispiel sind Zapfsäulen an Tankstellen, an denen die Ausgabe einer exakt definierten Flüssigkeitsmenge auf der Basis einer solchen Volumenmessung erfolgt.

Herkömmliche Verfahren und Vorrichtungen zur Abgabe einer exakt definierten Flüssigkeitsmenge basieren im Regelfalle auf der Trennung von flüssigkeitsfördernden Aggregaten (Pumpen) sowie flüssigkeitsmessenden Aggregaten (realisiert als Volumenmesser, Kolbenmesser, Spindelmesser). Je nach Vorschriftenlage ist bei der Ermittlung einer exakt definierten Flüssigkeitsmenge auch eine Temperaturabhängigkeit des Volumens von der Flüssgkeitsmenge zu berücksichtigen, wodurch die Ermittlung Verfahren und Vorrichtungen erfordert, welche mehrere Berechnungsschritte bzw. eine kompliziertere Elektronik aufweisen müssen, um eine exakte Bestimmung der abgegebenen Flüssigkeitsmenge durchführen zu können.

Es ist daher die Aufgabe der vorliegenden Erfindung ein Verfahren und eine Abgabevorrichtung bereitzustellen, die eine einfachere und kostengünstigere Möglichkeit der Ermittlung einer exakt definierten Flüssigkeitsmenge bieten.

Erfindungsgemäß wird die Aufgabe dadurch gelöst, daß zur Ermittlung der exakt definierten Flüssigkeitsmenge wenigstens zwei Gewichtsmessungen durchgeführt werden.

Der Vorteil der Erfindung ist, daß direkt verwertbare Meßdaten vorliegen und keine weiteren Faktoren, wie etwa die Temperaturabhängigkeit berücksichtigt werden müssen. Es ist somit keine komplizierte Elektronik notwendig, die die Kosten der Herstellung und der Verwendung erhöhen würde.

Eine vorteilhafte Ausgestaltung der Erfindung sieht vor, daß die Ermittlung der exakt definierten Flüssigkeitsmenge durch Berechnung des Differenzwertes mindestens zweier Gewichtsmessungen erfolgt. Eine vorhandene Elektronik muß also lediglich eine Subtraktion durchführen, um die Menge der abgegebenen Flüssigkeit exakt zu berechnen, wobei der zeitlich frühere Wert der Minuend und der spätere der Subtrahend ist.

Eine weitere vorteilhafte Ausgestaltung der Erfindung sieht vor, daß die Ermittlung der exakt definierten Flüssigkeitsmenge durch Summation über Differenzwerte von Gewichtsmessungen erfolgt. Hierbei kann ebenfalls eine simple Elektronik verwendet werden, die die Addition und Subtraktion ausführen kann. Zur Berechnung des geldlichen Gegenwertes der abgegebenen exakt definierten Flüssigkeitsmenge kann der Wert der Summe mit einem Faktor multipliziert werden, so daß die Elektronik nur drei einfache Algorithmen ausführen muß.

Nach einer weiteren vorteilhaften Ausgestaltung der Erfindung werden beliebige Flüssigkeitsmengen periodisch aus einem Flüssigkeitsreservoir in einen zylinderförmigen Behälter transportiert, dessen Gewichtsmessung zu Beginn und am Ende einer Periode die gewünschten Werte liefert, deren Differenz zu bilden ist. Dieses ist notwendig, falls die gewünschte Abgabemenge die in dem Behälter befindliche beliebige Flüssigkeitsmenge überschreitet.

Eine weitere vorteilhafte Ausgestaltung der Erfindung sieht vor, daß das Gewicht des zylinderförmigen Behälters in jedem Befüllungszustand durch eine Wiegeeinheit gemessen wird. Dadurch kann die exakt definierte Flüssigkeitsmenge auch dann bestimmt werden, wenn der Abgabevorgang an einem beliebigen Punkt der Periode abgebrochen oder begonnen wird. Die Wiegeeinheit ist in Form einer Waage ausgebildet, die einen bestimmten Empfindlichkeitsgrad aufweist. Mit der Erfindung wird vorgeschlagen, daß die Wiegeeinheit eine Wägezelle ist. Diese kann auf einfache Weise mit dem zylinderförmigen Behälter verbunden werden und liefert als Kraftsensor exakte Werte zur weiteren Berechnung.

Nach einer weiteren vorteilhaften Ausgestaltung der Erfindung ist die Wiegeeinheit zur Berechnung der Differenzwerte, Summen und Multiplikationen mit einer Rechnereinheit verbunden, welche dazu nur einfachste Algorithmen ausführen können muß, und die den Abgabevorgang steuert. Die Rechnereinheit kann dazu eine Speichereinheit aufweisen, in die die Differenz- und Gewichtswerte abgelegt, und nach Beendigung der Flüssigkeitsabgabe zur weiteren Verarbeitung ausgelesen werden. Dazu ist es vorteilhaft, wenn die Rechnereinheit zu Beginn des Abgabevorgangs ein Startsignal und am Ende ein Endsignal erhält, wobei das letzte Signal gleichzeitig ein Aufforderungssignal zur weiteren Verarbeitung der Werte sein kann.

Eine weitere vorteilhafte Ausgestaltung der Erfindung sieht vor, daß bei Abgabe einer größeren Flüssigkeitsmenge als der oben genannten beliebigen Flüssigkeitsmenge die beliebigen Flüssigkeitsmengen periodisch in ein befüllbares Behältnis gefüllt werden. Am Anfang und Ende der einzelnen Perioden bzw. am Anfang und Ende der Abgabe erfolgen die Gewichtsmessungen, die zur exakten Ermittlung der abgegebenen Flüssigkeitsmenge und ihres Gegenwertes dienen.

Nach einer weiteren vorteilhaften Ausgestaltung der Erfindung erfolgt bei periodischem Füllen und Entleeren des Behälters gleichzeitig eine periodische Gasrückführung aus dem zu befüllenden Behältnis über den zylinderförmigen Behälter in das Flüssigkeitsreservoir. Vorzugsweise ist das Volumen der abgegebenen Flüssigkeitsmenge pro Periode proportional dem Volumen des rückgeführten Gases, wodurch die Explosionsgefahr verringert wird und gleichzeitig ein Druckausgleich stattfindet. Je nach Anforderung und Wunsch können sich die genannten Volumina auch in Ihrer Größe unterscheiden.

Mit der Erfindung wird weiter vorgeschlagen, daß Gasrückführung und Flüssigkeitstransport jeweils über mindestens ein Ventil in nur eine Richtung erfolgen. Dadurch wird zum einen ein Rückfließen der Flüssigkeit in den zylinderförmigen Behälter und das Flüssigkeitsreservoir, und zum anderen ein Rückströmen des rückgeführten Gases in den zylinderförmigen Behälter und das befüllbare Behältnis verhindert, was ebenfalls die Explosionsgefahr verringert und die Funktionsweise der Abgabevorrichtung unterstützt. Weiter wird mit der Erfindung vorgeschlagen, daß Gasrückführung und Flüssigkeitstransport über mindestens ein Mehrfachventil erfolgen. Dadurch ist das Anschließen mehrerer Leitungssysteme der Gasrückführung und des Flüssigkeitstransports mit gegebenenfalls unterschiedlichen Flüssigkeiten (z.B. Kraftstoffsorten) an einen zylinderförmigen Behälter möglich.

Mit der Erfindung wird weiter vorgeschlagen, daß Gasrückführung und Flüssigkeitstransport jeweils über mindestens ein Ventil in beide Richtungen erfolgen. Damit wird ein Rückfließen der Flüssigkeit aus dem zylinderförmigen Behälter in das Flüssigkeitsreservoir ermöglicht, was benötigt wird, um den zylinderförmigen Behälter zu entleeren und somit auf einen sortenreinen Flüssigkeitswechsel vorzubereiten.

Mit der Erfindung wird weiter vorgeschlagen, daß das Ansaugen und Abgeben von Rückführgasen und Flüssigkeiten von einer im zylinderförmigen Behälter befindliche Kolbenhubvorrichtung durchgeführt wird, die durch periodische Bewegung ein periodisches Ansaugen und Abgeben möglich macht. Die Kolbenhubvorrichtung weist dazu mindestens einen Kolben auf, der in dem zylinderförmigen Behälter verschiebbar ist und die Gleichzeitigkeit von Flüssigkeitstransport und Gasrückführung gewährleistet. Bei Verwendung eines Kolbens, der den zylinderförmigen Behälter in zwei Kammern unterteilt, ist eine Kammer zum Ansaugen und Abgeben der Flüssigkeit und eine Kammer zum Ansaugen und Abgeben von Rückführgas vorgesehen, wodurch bei Verschieben des Kolbens entweder Flüssigkeit angesaugt und Rückführgas abgegeben, oder Flüssigkeit abgegeben und Rückführgas angesaugt wird. Es wird also bei Flüssigkeitsabgabe keine zusätzliche Vorrichtung zur Gasrückführung benötigt, was die Anzahl der Bauteile reduziert. Die Kolbenhubvorrichtung kann bei vorhandener Druckförderung eingesetzt werden und ist sehr leise betreibbar. Befindet sich die Kammer zum Ansaugen und Abgeben der Flüssigkeit über der Kammer zum Ansaugen und Abgeben des Rückführgases, so ergibt sich der Vorteil, daß ein eventuelles Luftansaugen beim Ansaugen der Flüssigkeit unkritisch ist, da sich das Leitungssystem des Flüssigkeitstransports mit den Ventilen am oberen Ende der oberen Kammer befinden, so daß die eventuell angesaugte Luft mit der Flüssigkeit herausgepumpt wird, wodurch das Festsetzen einer Luftblase in der obigen Kammer ausgeschlossen ist. Weiterhin ist ein Ansaugen von Flüssigkeit beim Ansaugen des Rückführgases unkritisch, da das Leitungssystem der Gasrückführung mit den Ventilen am unteren Ende der unteren Kammer angebracht sind, so daß die angesaugte Flüssigkeit mit dem Gas in das Flüssigkeitsreservoir zurückgepumpt werden kann. Weiterhin ist eine Kolbenhubvorrichtung denkbar, die zwei oder mehrere Kolben aufweist, die entsprechend in zwei bzw. mehreren Kammern verschoben werden.

Eine weitere vorteilhafte Ausgestaltung der Erfindung sieht vor, daß die Kolbenhubvorrichtung durch mindestens eine Antriebseinheit betrieben wird, die die periodische Bewegung der Hubvorrichtung erzeugt und diese nach Beendigung der Abgabe stoppt. Die Antriebseinheit kann dabei elektro-hydraulisch, elektromotorisch sein oder aus einem Linearantrieb bestehen. Der Vorteil eines elektro-hydraulischen Antriebs ist, daß nur ein Antrieb pro Abgabevorrichtung oder eventuell für mehrere Abgabevorrichtungen benötigt wird. Bei einem elektromotorischen Antrieb ist der Vorteil dadurch gegeben, daß jede Abgabevorrichtung unabhängig von eventuell anderen vorhandenen Abgabevorrichtungen ansteuerbar ist. Dazu muß keine zusätzliche Verrohrung wie bei einem elektro-hydraulischen Antrieb vorhanden sein, und es findet somit auch kein Transport von Hydraulikflüssigkeiten innerhalb und außerhalb der Abgabevorrichtung statt. Ein Linearantrieb weist die gleichen Vorteile wie der elektromotorische Antrieb auf, jedoch ist ein erhöhter Steueraufwand nötig. Zudem sind bei Verwendung eines Linearantriebs Bauteile wie zum Beispiel Riemenscheiben, Riemen, Spindeln oder dergleichen nötig. Eine elektro-hydraulische Antriebseinheit kann durch mindestens ein, vorzugsweise durch genau ein hydraulisches Aggregat gesteuert werden, durch welches der Abgabedruck so einstellbar ist, daß keine Überstromverluste auftreten. Bei Verwendung einer derartigen elektro-hydraulischen Antriebseinheit weist der zylinderförmige Behälter mit der Kolbenhubvorrichtung vorzugsweise drei Kammern auf, wobei eine Kammer zur Aufnahme der Hydraulikflüssigkeit dient, und über ein Leitungssystem mit einem hydraulischen Aggregat verbunden ist.

Nach einer weiteren vorteilhaften Ausgestaltung der Erfindung wird ein hydraulisches Antriebsystem zum Antrieb der Kolbenhubvorrichtung verwendet, der als Druckantrieb betrieben wird. Nach einem erfindungsgemäßen Vorschlag ist der Druckantrieb entweder ein Hochdruck- oder ein Niederdruckantrieb. Die Verwendung des hydraulischen Antriebsystems als Hochdruck- oder Niederdruckantrieb hängt von den jeweiligen Anforderungen und baulichen Ausgestaltungen der Kolbenhubvorrichtung ab. Der Druckantrieb kann zum Beispiel ein hydraulisches Aggregat sein.

Nach einer weiteren vorteilhaften Ausgestaltung der Erfindung erfolgt ein Gas/Luft-Ausgleich über mindestens eine rohrförmige Kolbenstange der Kolbenhubvorrichtung, wodurch bei Verwendung eines Niederdruckantriebs ein Verschieben der Kolbenhubvorrichtung bei geringerem Widerstand ermöglicht wird, da ein Druckausgleich zwischen Zwischenräumen erfolgt, die durch Verschiebung der Kolben in ihrer Größe variieren. Die Kolbenstange kann aber auch massiv ausgebildet sein, so daß durch den bei Verschiebung der Kolben entstehenden Druck ein größerer Widerstand entsteht, der durch die Verwendung eines Hochdruckantriebs kompensiert werden muß.

Eine weitere vorteilhafte Ausgestaltung der Erfindung sieht vor, daß die beliebige Flüssigkeitsmenge durch das Volumen einer einen Kolben enthaltenden zylinderförmigen Kammer begrenzt wird. Diese beliebigen Flüssigkeitsmengen sind Teilmengen der über diese Mengen hinausgehenden abzugebenden Flüssigkeitsmengen und hängen von der baulichen Ausgestaltung des zylinderförmigen Behälters und der Kolbenhubvorrichtung und von der Temperatur ab. Die Teilmengen werden gewogen und deren Gewicht addiert, um die exakt definierte abgegebene Flüssigkeitsmenge zu bestimmen, wobei am Ende eines Abgabevorgangs auch ein Rest der Teilmenge addiert werden kann.

Eine weitere vorteilhafte Ausgestaltung der Erfindung sieht vor, daß die Abgabevorrichtung mindestens mit einem eine Kolbenhubvorrichtung aufweisenden zylinderförmigen Behälter betrieben wird. Vorzugsweise weist die Abgabevorrichtung zwei derartige Behälter auf, wodurch eine kontinuierliche Flüssigkeitsabgabe gewährleistet ist, da ein zylinderförmiger Behälter Flüssigkeit abgeben kann, während der andere sich im Ansaugzustand befindet. Die beiden Kolbenhubvorrichtungen laufen daher gegenläufig und die Perioden derselben sind untereinander vorzugsweise um eine halbe Periode verschoben.

Nach einer weiteren vorteilhaften Ausgestaltung der Erfindung wird die Abgabevorrichtung durch mindestens ein hydraulisches Aggregat angetrieben. Vorzugsweise weist die Abgabevorrichtung genau ein hydraulisches Aggregat auf, wodurch Bauteile gespart werden und eine einfache Kopplung zwischen den Kolbenhubvorrichtungen gegeben ist.

Die Erfindung sieht weiter eine Abgabevorrichtung zur Abgabe einer exakten Flüssigkeitsmenge vor, die einen füll- und entleerbaren zylinderförmigen Behälter aufweist, der in jedem Befüllungszustand eine Verbindung zu einer Wiegeeinheit aufweist, wodurch eine Gewichtsmessung zu jeder Zeit erfolgen kann. Der zylinderförmige Behälter dient zur Aufnahme beliebiger Flüssigkeitsmengen, deren Reduktion und somit das Gewicht der abgegebenen Flüssigkeitsmenge durch eine Subtraktion der vor und nach der Abgabe gemessenen Gewichtswerte ermittelt werden kann. Die beliebige Menge hängt dabei von der baulichen Ausgestaltung des zylinderförmigen Behälters und der Temperatur ab. Die Wiegeeinheit ist mit dem Behälter verbunden, so daß in jedem Befüllungszustand des Behälters eine Gewichtsmessung erfolgen kann. Die Verbindung ist vorzugsweise starr ausgebildet. Die Wiegeeinheit ist dabei eine Waagenart, die eine Gewichtsmessung mit einer gewünschten Genauigkeit erlaubt. Vorzugsweise ist die Wiegeeinheit durch eine Wägezelle gegeben. Diese ist ein einfacher Kraftsensor, der eine exakte Gewichtsmessung ermöglicht.

Nach einer vorteilhaften Ausgestaltung der Erfindung weist der Behälter eine Kolbenhubvorrichtung auf, die ein Ansaugen und Abgeben von Gasen und Flüssigkeiten ermöglicht.

Eine weitere vorteilhafte Ausgestaltung der Erfindung sieht vor, daß die Kolbenhubvorrichtung mindestens eine Kammer aufweist, die zur Aufnahme von Flüssigkeiten und zur Aufnahme von Rückführgasen dient. Es sind aber auch mehrere Kammern denkbar, wobei die Kammern unterschiedliche Volumina aufweisen können.

Eine weitere vorteilhafte Ausgestaltung der Erfindung sieht vor, daß eine Kammer eine Verbindung zum Leitungssystem der Gasrückführung aufweist. Dadurch wird bei Verschieben der Kolbenhubvorrichtung Rückführgas über das Leitungssystem aus dem zu befüllenden Behältnis in die Kammer gesaugt und anschließend bei gegenläufigem Hub über das Leitungssystem in das Flüssigkeitsreservoir abgegeben.

Eine weitere vorteilhafte Ausgestaltung der Erfindung sieht vor, daß eine Kammer eine Verbindung zum hydraulischen Antriebsystem aufweist, durch welches die Kolbenhubvorrichtung verschiebbar ist.

Eine weitere vorteilhafte Ausgestaltung der Erfindung sieht vor, daß eine Kammer eine Verbindung mit dem Leitungssystem des Flüssigkeitstransports aufweist, wodurch bei Verschieben der Kolbenhubvorrichtung je nach Verschieberichtung ein Ansaugen oder Abgeben von Flüssigkeit von der Kammer über das Leitungssystem aus dem Flüssigkeitsreservoir bzw. in das befüllbare Behältnis erfolgt.

Nach einer weiteren vorteilhaften Ausgestaltung der Erfindung weisen die Trennwände zwischen den Kammern mindestens eine Bohrung auf, die zur Führung der Kolbenhubvorrichtung dient. Vorzugsweise weisen die Trennwände eine einzige derartige Bohrung auf.

Nach einer weiteren vorteilhaften Ausgestaltung der Erfindung weist die Kolbenhubvorrichtung mindestens einen Kolben auf, der in dem zylinderförmigen Behälter verschiebbar ist. Bei Verschieben des Kolbens entsteht auf einer Seite des Kolbens ein Überdruck zum Abgeben und auf der anderen Seite ein Unterdruck zum Ansaugen von Flüssigkeiten oder Rückführgasen. Der Kolben wird vorzugsweise periodisch hin und her bewegt, wobei bei Abgabe einer Flüssigkeit gleichzeitig ein Ansaugen von Rückführgas erfolgt und umgekehrt. Es wird somit kein weiteres Bauteil zur Gasrückführung bei Flüssigkeitsabgabe benötigt. Die Kolben können untereinander verschiedene Flächen aufweisen, was die Verwendbarkeit der Kolbenhubvorrichtung flexibilisiert und das Betreiben derselben mit unterschiedlichen Drücken ermöglicht.

Eine weitere vorteilhafte Ausgestaltung der Erfindung sieht vor, daß die Kolbenhubvorrichtung mindestens eine Kolbenstange aufweist. Diese ist mit einem oder mehreren Kolben verbunden, wodurch ein simultanes Arbeiten mehrerer Kolben möglich ist, so daß verschiedene Arbeitsschritte gleichzeitig erfolgen können. Vorzugsweise ist eine Kolbenstange vorgesehen, die in den Bohrungen der Trennwände geführt wird. Die Kolbenstange kann rohrförmig oder massiv ausgebildet sein. Im ersten Fall wird durch Öffnungen in der rohrförmigen Kolbenstange ein Gas/Luft-Ausgleich zwischen Zwischenbereichen gewährleistet, in denen ein Luft/Gas-Gemisch durch Verschieben des Kolbens verdrängt wird. Weiterhin wird durch diese Ausgestaltung der Kolbenstange eine Verwendung eines Niederdruckantriebs möglich, der zum Betreiben der Kolbenhubvorrichtung dient, weil ein geringerer Verschiebewiderstand gegeben ist. Ist die Kolbenstange massiv ausgebildet, kann kein derartiger Gas/Luft-Ausgleich stattfinden, wodurch in den Zwischenräumen Drücke entstehen, die einen größeren Widerstand gegen die Verschiebung der Kolbenhubvorrichtung bilden. Deshalb muß bei Verwendung einer solchen Kolbenstange ein höherer Druck zum Betreiben der Kolbenhubvorrichtung verwendet werden.

Eine weitere vorteilhafte Ausgestaltung der Erfindung sieht vor, daß die Kolbenhubvorrichtung mit einer Antriebseinheit verbunden ist. Diese kann eicktro-hydraulisch, elektromotorisch oder durch einen Linearantrieb gegeben sein. Die Antriebseinheit erzeugt die periodische Bewegung der Kolbenhubvorrichtung. Die Vorteile der verschiedenen Arten der Antriebseinheit sind oben beschrieben. Mit der Erfindung wird vorgeschlagen, daß die Antriebseinheit ein hydraulisches Antriebsystem ist, welches die Kolbenhubvorrichtung mittels einer Hydraulikflüssigkeit antreibt.

Eine weitere vorteilhafte Ausgestaltung der Erfindung sieht vor, daß das hydraulische Antriebsystem einen Druckantrieb aufweist. Dieser kann als Hochdruckantrieb betrieben werden, was bei Verwendung einer massiven Kolbenstange günstig, da hierbei aufgrund des großen Widerstandes ein hoher Druck zum Verschieben der Kolben benötigt wird. Der Druckantrieb kann auch als Niederdruckantrieb betrieben werden, was bei Verwendung einer rohrförmigen Kolbenstange günstig, da mittels Öffnungen in dieser Kolbenstange durch diese ein Gas/Luft-Ausgleich zwischen Zwischenbereichen erfolgen kann, wodurch ein Druckausgleich stattfindet, welcher den Verschiebewiderstand der Kolbenhubvorrichtung verringert. Mit der Erfindung wird weiter vorgeschlagen, daß das hydraulische Antriebsystem mindestens ein hydraulisches Aggregat aufweist, welches durch Druckveränderungen die Kolbenhubvorrichtung steuert. Vorzugsweise ist zur Verringerung der Anzahl der Bauteile ein einziges Aggregat vorgesehen. Nach einem weiteren Vorschlag weist das hydraulische Antriebssystem ein Leitungssystem auf. Dieses verbindet die Kolbenhubvorrichtung mit dem hydraulischen Aggregat. Vorzugsweise weisen die Leitungen einen elastischen Abschnitt auf. Das Leitungssystem weist mindestens ein Ventil auf. Vorzugsweise sind zwei Ventile vorgesehen, die die Flußrichtung der Hydraulikflüssigkeit regeln.

Nach einer weiteren vorteilhaften Ausgestaltung der Erfindung weist die Abgabevorrichtung ein Gasrückführungssystem auf. Dieses besteht aus einem Leitungssystem und einer Kammer des zylinderförmigen Behälters, in dem ein Kolben verschiebbar lagert. Durch Verschieben des Kolbens wird das Rückführgas je nach Verschieberichtung über das Leitungssystem angesaugt oder abgegeben. Nach einem Vorschlag der Erfindung weist das Gasrückführungssystem mindestens ein Ventil auf. Vorzugsweise sind mindestens zwei Ventile vorgesehen, die den Fluß des Rückführgases auf eine Richtung beschränken, so daß das Rückführgas weder in den zylinderförmigen Behälter, noch in das befüllbare Behältnis zurückströmen kann. Weiterhin weist das Gasrückführungssystem mindestens eine elastische Verbindung auf. Vorzugsweise sind mindestens zwei elastische Verbindungen vorgesehen, die den Behälter mit den Ventilen verbinden.

Nach einer weiteren vorteilhaften Ausgestaltung der Erfindung weist die Abgabevorrichtung ein Flüssigkeitstransportsystem auf, welches aus einem Leitungssystem und einer Kammer des zylinderförmigen Behälters besteht, in dem ein Kolben verschiebbar gelagert ist. Durch Verschieben des Kolbens wird die Flüssigkeit über das Leitungssystem angesaugt oder abgegeben. Nach einem Vorschlag der Erfindung weist das Flüssigkeitstransportsystem mindestens ein Ventil auf. Vorzugsweise sind mindestens zwei Ventile vorgesehen, die das Rückfließen der Flüssigkeit in das Flüssigkeitsreservoir und den zylinderförmigen Behälter verhindern, und somit nur eine Flußrichtung erlauben, während die andere gesperrt ist.

Nach einem weiteren Vorschlag weist das Flüssigkeitstransportsystem mindestens eine elastische Verbindung auf. Vorzugsweise sind mindestens zwei elastische Verbindungen vorgesehen, die den Behälter mit den Ventilen verbinden.

Eine weitere vorteilhafte Ausgestaltung der Erfindung sieht vor, daß die Abgabevorrichtung mindestens ein Mehrfachventil aufweist. Dadurch sind mehrere Leitungssysteme zur Gasrückführung und zum Flüssigkeitsstransport anschließbar.

Nach einer weiteren vorteilhaften Ausgestaltung der Erfindung weist die Abgabevorrichtung mindestens einen mit einer Kolbenhubvorrichtung versehenen zylinderförmigen Behälter auf. Vorzugsweise weist die Abgabevorrichtung mindestens zwei derartige Behälter auf, wodurch ein kontinuierliches Abgeben und Ansaugen der Flüssigkeit und der Rückführgase gewährleistet ist, da durch die Kolbenhubvorrichtung des einen Behälters Flüssigkeit abgegeben wird, während sich die Kolbenhubvorrichtung des anderen Behälters im Ansaugprozeß befindet und umgekehrt.

Weiterhin sieht die Erfindung eine Zapfsäule für eine Tankstelle vor, die eine erfindungsgemäße oben beschriebene Abgabevorrichtung aufweist, und welche mit dem erfindungsgemäßen oben beschriebenen Verfahren betreibbar ist.

Weitere Vorteile und Merkmale der vorliegenden Erfindung ergeben sich aus der folgenden Beschreibung anhand der Figuren. Dabei zeigen
- Fig. 1: eine erfindungsgemäße Abgabevorrichtung mit Druckantrieb,
- Fig. 2: eine alternative Ausführung der erfindungsgemäßen Abgabevorrichtung mit einem Niederdruckantrieb und
- Fig. 3: eine weitere alternative Ausführung der erFindungsgemäßen Abgabevorrichtung mit einem Hochdruckantrieb.

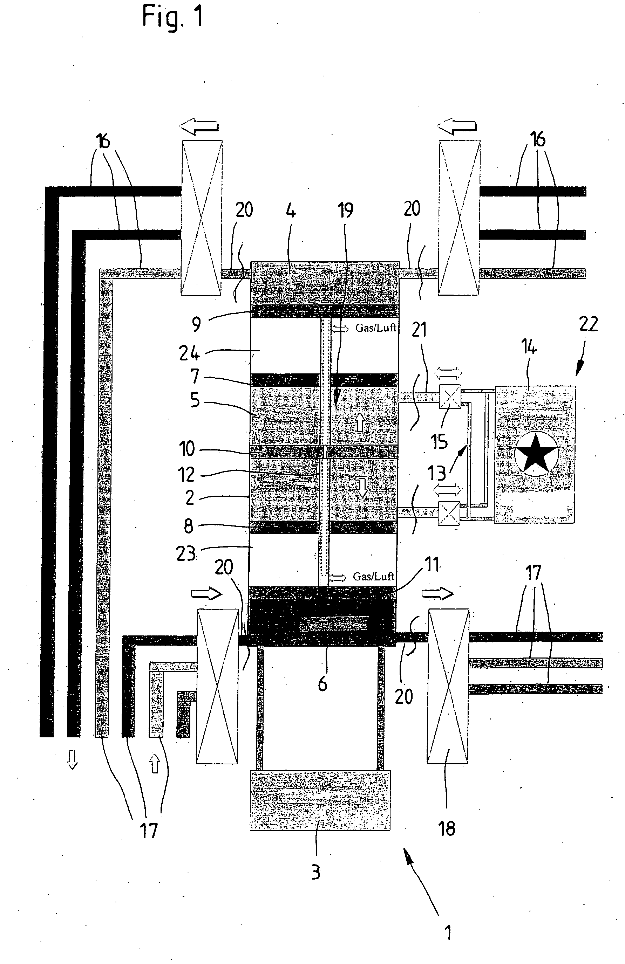

Fig. 1 zeigt eine erfindungsgemäße Abgabevorrichtung (1), welche mit einem Druckantrieb betrieben wird. Die Abgabevorrichtung (1) weist einen zylinderförmigen Behälter (2) auf, der mit einer Wägezelle (3) verbunden ist. Der Behälter (2) weist drei Kammern (4, 5, 6) auf, die durch Trennwände (7, 8) voneinander getrennt sind. In jeder dieser Kammern (4, 5, 6) befindet sich ein Kolben (9, 10, 11), wobei die Kolben (9, 10, 11) über eine Kolbenstange (12) miteinander verbunden sind. Die mittlere Kammer (5) ist über ein Leitungssystem (13) mit einem Hydrauük-Aggregat (14) verbunden, wobei das Leitungssystem (13) Ventile (15) aufweist. Die obere Kammer (4) ist mit dem Leitungssystem (16) der Gasrückführung verbunden, mit der Gas aus einem befüllbaren Behältnis (nicht dargestellt) über die obere Kammer (4) und das Leitungssystem (16) in ein Flüssigkeitsreservoir (nicht gezeigt) zurückgeführt wird. Die untere Kammer (6) ist mit dem Leitungssystem (17) des Flüssigkeitstransports verbunden, mit dem Flüssigkeit aus dem Flüssigkeitsreservoir über die Kammer (6) und dem Leitungssystem (17) in ein befüllbares Behältnis transportiert wird. Die Mehrfachventile (18) der Leitungssysteme (16, 17) erlauben einen Durchfluss der Gase und Flüssigkeiten in beide Richtungen. Die Ventile (15) des mit dem Hydraulik-Aggregates (14) verbundenen Leitungssystems (13) sind so ausgelegt, daß sie einen Fluß der Hydraulikflüssigkeit in beide Richtungen erlauben. In jedem Zustand der Kolbenhubvorrichtung (19) befindet sich dieselbe Hydraulikflüssigkeitsmenge in der mittleren Kammer (5) des Behälters (2), so daß das Gewicht des die Hydraulikflüssigkeit enthaltenden Behälters (2) nicht mit dieser variiert. Die Mehrfachventile (18) dienen dazu, daß mehrere Leitungssysteme (16, 17) zur Flüssigkeitsabgabe und Gasrückführung an einen Behälter (2) anschließbar sind, wobei der Behälter (2) über elastische Verbindungen (20, 21) mit den Ventilen (15, 18) verbunden ist.

Der Ablauf der Abgabe der exakt definierten Flüssigkeit beginnt mit einer ersten Messung des kompletten Aggregatgewichtes, wobei der Behälter (2) einen Rest Flüssigkeit enthalten kann. Dieser wird nun durch ein Verschieben der Kolben (9, 10, 11) nach unten aus der unteren Kammer (6) gepresst und über das Leitungssystem (17) des Flüsigkeitstransports in ein befüllbares Behältnis geführt. Nach vollständiger Entleerung der unteren Kammer (6) wird eine erneute Gewichtsmessung des Behälters (2) vorgenommen. Durch Berechnung des Differenzwertes zwischen der ersten und der zweiten Gewichtsmessung kann das Gewicht der abgegebenen Flüssigkeitsmenge ermittelt werden. Wird keine weitere Flüssigkeit abgegeben, so kann der Differenzwert mit einem Faktor multipliziert werden, um den geldlichen Gegenwert zur Abgabemenge zu berechnen. Wird eine größere Flüssigkeitsmengenabgabe gewünscht, so wird der mittlere Kolben (10) über das hydraulische Antriebssystem (22) nach oben verschoben, wobei gleichzeitig der untere Kolben (11) nach oben verschoben wird. Dadurch bildet sich unterhalb des unteren Kolbens (11) ein Unterdruck, durch den Flüssigkeit über das Leitungssystem (17) und das Mehrfachventil (18) angesaugt wird. Gleichzeitig wird oberhalb des unteren Kolbens (11) ein Gas/Luft-Gemisch aus dem unteren Zwischenraum (23) über die rohrförmige Kolbenstange (12) in den oberen Zwischenraum (24) gepresst, damit sich im unteren Zwischenraum (23) kein die Funktionsweise der Hubvorrichtung (19) behindernder Überdruck aufbaut. Die Kolbenstange (12) ist dazu mit Öffnungen (nicht gezeigt) versehen, die das Entweichen des Gas/Luft-Gemisches von dem unteren (23) in den oberen Zwischenraum (24) ermöglichen. Ist der untere Kolben (11) in seiner oberen Stellung angekommen, findet eine weitere Gewichtsmessung statt. Danach verschiebt das hydraulische Antriebsystem (22) den unteren Kolben (11) wieder nach unten, und ein erneutes Herauspressen der Flüssigkeit erfolgt. Wird die untere Kammer (6) nicht vollständig entleert, so kommt es nach Ende der Abgabe zu einer weiteren Gewichtsmessung des Behälters (2), zu einer weiteren Berechnung eines Differenzwertes der beiden zuletzt gemessenen Gewichtswerte. Dieser Differenzwert wird zu dem vorhergehenden Differenzwert addiert, so daß das Gewicht der abgegebenen Flüssigkeitsmenge ermittelbar ist. Nun kann wieder die Multiplikation dieses Gewichtswertes mit einem Faktor erfolgen, so daß der geldliche Gegenwert der Flüssigkeitsabgabemenge festgesetzt werden kann. Wird die untere Kammer (6) vollständig entleert, so erfolgt die letztere Messung erst in diesem Zustand. Wird die Abgabe noch größerer Flüssigkeitsmengen gewünscht, so wird die untere Kammer (6) wieder auf dem beschriebenen Weg gefüllt und entleert, so daß ein weiterer Differenzwert vorliegt, der ebenfalls zu den vorhergehenden Differenzwerten addiert wird. Egal wieviel Flüssigkeit abgegeben wird, kann so durch Summation über die einzelnen Differenzwerte die Berechnung der abgegebenen exakt definierten Flüssigkeitsmenge erfolgen.

Ein weiterer Vorteil der in Fig. 1 gezeigten Abgabevorrichtung (1) ist, daß simultan zum Verschieben des unteren Kolbens (11) der obere Kolben (9) verschoben wird. Dieser saugt bei Verschiebung nach unten, also bei Abgabe der Flüssigkeit, Gas über das Leitungssystem (16) der Gasrückführung aus dem befüllbaren Behältnis an, und gibt diese anschließend bei Verschiebung nach oben wieder über das Leitungssystem (16) an das Flüssigkeitsreservoir ab. Das Volumen der abgegebenen Flüssigkeitsmenge und des angesaugten Gases sind bei gleichgroßer Ausgestaltung der oberen (4) und der unteren Kammer (6) äquivalent, wodurch kaum Gas freigesetzt wird, was die Explosionsgefahr minimiert und Druckunterschiede ausgleicht.

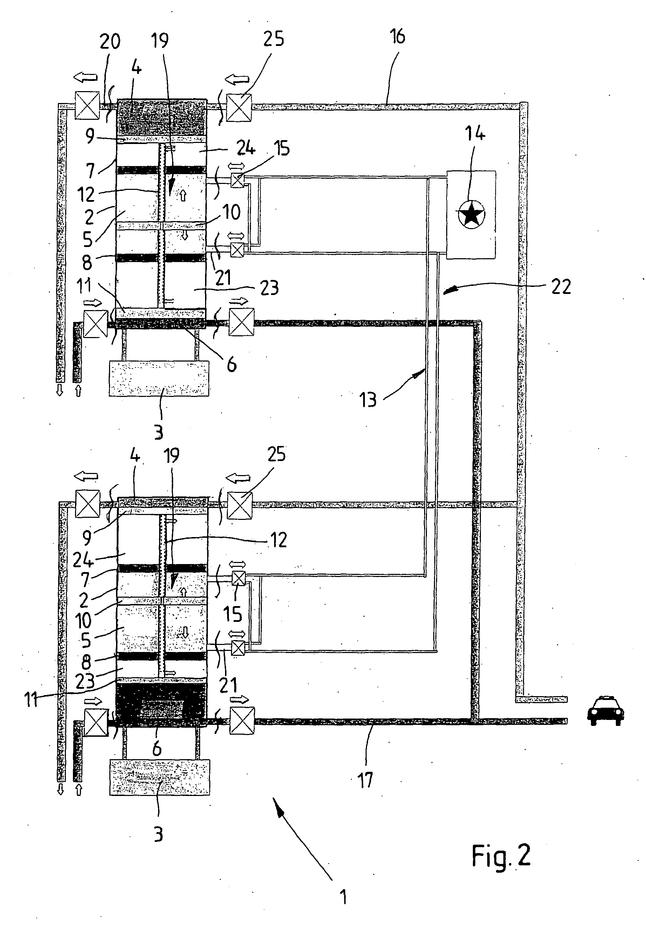

Fig. 2 zeigt eine andere Ausführung einer erfindungsgemäßen Abgabevorrichtung (1), bei der zwei eine Kolbenhubvorrichtung (19) enthaltende Behälter (2) vorgesehen sind. Die Abgabevorrichtung (1) wird hierbei durch einen Niederdruckantrieb betrieben, der im Wesentlichen dem in Fig. 1 gezeigten Druckantrieb entspricht. Die beiden Behälter (2) sind über das Leitungssystem (13) des hydraulischen Antriebsystems (22) mit einem einzigen Hydraulik-Aggregat (14) verbunden, welches somit beide Hubvorrichtungen steuert. Dadurch, dass die beiden Hubvorrichtungen gegenläufig betrieben werden, ist eine kontinuierliche Flüssigkeitsmengenabgabe gewährleistet, da die untere Kammer (6) die Flüssigkeit abgibt, während die andere sich im Ansaugprozeß befindet. Zur Berechnung der exakt definierten Flüssigkeitsmenge werden die Differenzwerte des Gewichtes der beiden Behälter (2) addiert und anschließend zur Bestimmung ihres geldlichen Gegenwertes mit einem Faktor multipliziert. In dieser Ausführung sind statt der Mehrfachventile (18) einfache Ventile (25) vorgesehen, die ebenfalls den Fluß von Gas und Flüssigkeit regulieren.

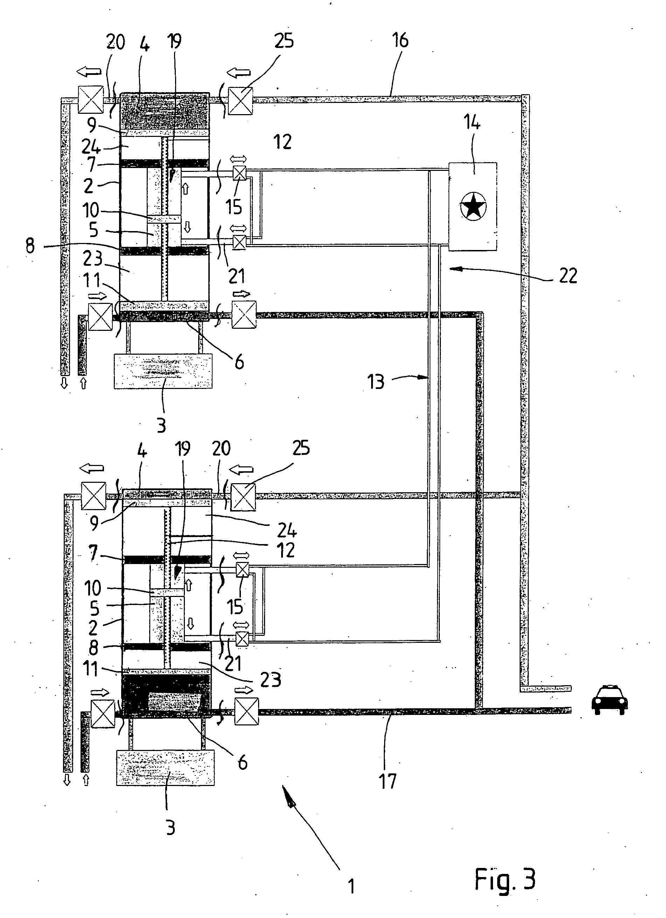

Fig. 3 zeigt eine alternative Ausführung der in Fig. 2 gezeigten erfindungsgemäßen Abgabevorrichtung (1), wobei die Abgabevorrichtung (1) in dieser Ausführung durch einen Hochdruckantrieb betrieben wird. Hier ist die Kolbenstange (12) massiv ausgebildet, so daß zwischen den Zwischenräumen (23, 24) kein Gas/Luft-Ausgleich stattfinden kann. Dadurch bildet sich bei Verschiebung der Kolben (9, 10, 11) ein Widerstand, der durch die Verwendung eines höheren Drucks im hydraulischen Antriebsystem (22) kompensiert werden muß. Ansonsten entspricht die Funktionsweise dieser Abgabevorrichtung (1) der in Fig. 2 beschriebenen.

Die beschriebenen Ausführungsbeispiele dienen nur der Erläuterung und sind nicht beschränkend.

### Bezugszeichenliste

- 1: Abgabevorrichtung
- 2: Behälter
- 3: Wägezelle
- 4: Obere Kammer
- 5: Mittlere Kammer
- 6: Untere Kammer
- 7: Obere Trennwand
- 8: Untere Trennwand
- 9: Oberer Kolben
- 10: Mittlerer Kolben
- 11: Unterer Kolben
- 12: Kolbenstange
- 13: Leitungssystem des hydraulischen Antriebsystems
- 14: Hydraulisches Aggregat
- 15: Ventil des hydraulischen Antriebsystems
- 16: Leitungssystem der Gasrückführung
- 17: Leitungssystem des Flüssigkeitstransports
- 18: Mehrfachventil
- 19: Kolbenhubvorrichtung
- 20: Elastische Verbindung der Gasrückführung und des Flüssigkeitstransports
- 21: Elastische Verbindung des hydraulischen Antriebsystems
- 22: Hydraulisches Antriebsystem
- 23: Unterer Zwischenraum
- 24: Oberer Zwischenraum
- 25: Ventil des Leitungssystems der Gasrückführung und des Flüssigkeitstransports

## Patentansprüche

1. Verfahren zur Abgabe einer exakt definierten Flüssigkeitsmenge an einer Abgabevorrichtung (1), **dadurch gekennzeichnet, daß** zur Ermittlung der exakt definierten Flüssigkeitsmenge mindestens zwei Gewichtsmessung durchgeführt werden.

2. Verfahren nach Anspruch 1, **dadurch gekennzeichnet, daß** die Ermittlung der exakt definierten Flüssigkeitsmenge durch Berechnung des Differenzwertes mindestens zweier aufeinanderfolgender Gewichtsmessungen erfolgt.

3. Verfahren nach Anspruch 2, **dadurch gekennzeichnet, daß** die Ermittlung der exakt definierten Flüssigkeitsmenge durch Summation über die Differenzwerte einer Mehrzahl von Gewichtsmessungen erfolgt.

4. Verfahren nach einem der vorhergehenden Ansprüche, **dadurch gekennzeichnet, daß** beliebige Flüssigkeitsmengen periodisch aus einem Flüssigkeitsreservoir in einen zylinderförmigen Behälter (2) transportiert werden.

5. Verfahren nach einem der vorhergehenden Ansprüche, **dadurch gekennzeichnet, daß** eine beliebige Flüssigkeitsmenge aus einem zylinderförmigen Behälter (2) in ein Flüssigkeitsreservoir zurück transportiert werden kann.

6. Verfahren nach Anspruch 4, **dadurch gekennzeichnet, daß** das Gewicht des Behälters in jedem Befüllungszustand durch eine Wiegeeinheit (3) gemessen wird.

7. Verfahren nach Anspruch 5, **dadurch gekennzeichnet, daß** die Wiegeeinheit (3) zur Berechnung der Differenzen und Summen mit einer Rechnereinheit verbunden ist.

8. Verfahren nach einem der vorhergehenden Ansprüche, **dadurch gekennzeichnet, daß** bei Abgabe einer größeren Flüssigkeitsmenge als der beliebigen Flüssigkeitsmenge die beliebigen Flüssigkeitsmengen periodisch in ein befüllbares Behältnis gefüllt werden.

9. Verfahren nach einem der vorhergehenden Ansprüche, **dadurch gekennzeichnet, daß** bei periodischem Füllen und Entleeren des zylinderförmigen Behälters (2) gleichzeitig eine periodische Gasrückführung aus einem befülbaren Behältnis über den zylinderförmigen Behälter (2) in ein Flüssigkeitsreservoir erfolgt.

10. Verfahren nach einem der vorhergehenden Ansprüche, **dadurch gekennzeichnet, daß** der Flüssigkeitstransport und die Gasrückführung durch eine im zylinderförmigen Behälter (2) befindliche Kolbenhubvorrichtung (19) durchgeführt werden.

11. Verfahren nach Anspruch 9, **dadurch gekennzeichnet, daß** die Kolbenhubvorrichtung (19) durch mindestens eine Antriebseinheit betrieben wird.

12. Verfahren nach Anspruch 10, **dadurch gekennzeichnet, daß** die Antriebseinheit ein über einen Druckantrieb betriebenes hydraulisches Antriebsystem (22) ist.

13. Verfahren nach einem der vorhergehenden Ansprüche, **dadurch gekennzeichnet, daß** ein Gas/Luft-Ausgleich über mindestens eine Kolbenstange (12) der Kolbenhubvorrichtung (19) erfolgt.

14. Verfahren nach einem der vorhergehenden Ansprüche, **dadurch gekennzeichnet, daß** die bestimmte Flüssigkeitsmenge durch das Volumen einer einen Kolben (9, 10, 11) enthaltenden zylinderförmigen Kammer (4, 5, 6) begrenzt wird.

15. Verfahren nach einem der vorhergehenden Ansprüche, **dadurch gekennzeichnet, daß** die Abgabevorrichtung (1) mindestens mit einem eine Kolbenhubvorrichtung (19) aufweisenden zylinderförmigen Behälter (2) betrieben wird.

16. Verfahren nach einem der vorhergehenden Ansprüche, **dadurch gekennzeichnet, daß** die Abgabevorrichtung (1) durch mindestens ein hydraulisches Aggregat (14) angetrieben wird.

17. Abgabevorrichtung (1) zur Abgabe einer exakten Flüssigkeitsmenge, **dadurch gekennzeichnet, daß** ein füll- und entleerbarer zylinderförmiger Behälter (2) vorgesehen ist, der in jedem Befüllungszustand eine Verbindung mit einer Wiegeeinheit (3) aufweist.

18. Abgabevorrichtung (1) nach Anspruch 16, **dadurch gekennzeichnet, daß** der zylinderförmige Behälter (2) eine Kolbenhubvorrichtung (19) aufweist.

19. Abgabevorrichtung (1) nach Anspruch 17, **dadurch gekennzeichnet, daß** die Kolbenhubvorrichtung (19) mindestens eine Kammer (4, 5, 6) aufweist.

20. Abgabevorrichtung (1) nach Anspruch 18, **dadurch gekennzeichnet, daß** eine Kammer (4) eine Verbindung zum Leitungssystem (16) der Gasrückführung aufweist.

21. Abgabevorrichtung (1) nach Anspruch 18, **dadurch gekennzeichnet, daß** eine Kammer (5) eine Verbindung zu einem hydraulischen Antriebsystem (21) aufweist.

22. Abgabevorrichtung (1) nach Anspruch 18, **dadurch gekennzeichnet, daß** eine Kammer (6) eine Verbindung zu dem Leitungssystem (17) des Flüssigkeitstransportsystems aufweist.

23. Abgabevorrichtung (1) nach einem der Ansprüche 18 bis 21, **dadurch gekennzeichnet, daß** Trennwände (7, 8) zwischen den Kammern (4, 5, 6) mindestens eine Bohrung aufweisen.

24. Abgabevorrichtung (1) nach einem der Ansprüche 17 bis 22, **dadurch gekennzeichnet, daß** die Kolbenhubvorrichtung (19) mindestens einen Kolben (9, 10, 11) aufweist.

25. Abgabevorrichtung (1) nach einem der Ansprüche 17 bis 23, **dadurch gekennzeichnet, daß** die Kolbenhubvorrichtung (19) mindestens eine Kolbenstange (12) aufweist.

26. Abgabevorrichtung (1) nach einem der Ansprüche 17 bis 24, **dadurch gekennzeichnet, daß** die Kolbenhubvorrichtung (19) mit einer Antriebseinheit verbunden ist.

27. Abgabevorrichtung (1) nach Anspruch 25, **dadurch gekennzeichnet, daß** die Antriebseinheit ein durch einen Druckantrieb betriebenes hydraulisches Antriebsystem (22) aufweist.

28. Abgabevorrichtung nach einem der Ansprüche 16 bis 26, **dadurch gekennzeichnet, daß** die Abgabevorrichtung (1) ein Gasrückführungssystem aufweist.

29. Abgabevorrichtung (1) nach einem der Ansprüche 16 bis 27, **dadurch gekennzeichnet, daß** die Abgabevorrichtung (1) ein Flüssigkeitstransportsystem aufweist.

30. Abgabevorrichtung (1) nach einem der Ansprüche 16 bis 28, **dadurch gekennzeichnet, daß** die Abgabevorrichtung (1) mindestens ein Mehrfachventil (18) aufweist.

31. Abgabevorrichtung (1) nach einem der Ansprüche 16 bis 29, **dadurch gekennzeichnet, daß** die Abgabevorrichtung (1) mindestens einen mit einer Kolbenhubvorrichtung (19) versehenen zylinderförmigen Behälter (2) aufweist.

32. Abgabevorrichtung (1) nach einem der Ansprüche 16 bis 30, **dadurch gekennzeichnet, daß** die Verbindungen (20, 21) am Behälter (2) elasitsche Verbindungen sind.

33. Zapfsäule für eine Tankstelle, **dadurch gekennzeichnet, daß** die Zapfsäule eine erfindungsgemäße Abgabevorrichtung (1) nach den Ansprüchen 16 bis 30 aufweist, welche mit dem erfindungsgemäßen Verfahren nach den Ansprüche 1 bis 15 betreibbar ist.
